# EUROPEAN PATENT APPLICATION

(11) **EP 0 675 246 A1**
(43) Date of publication of application: **04.10.1995**
(21) Application number: 95200714.4
(22) Date of filing: 22.03.1995
(51) Int. Cl.: E04H 5/04

(54) **Concrete transformer kiosk**

(30) Priority: 30.03.1994 NL 9400506
(71) Applicant: N.V. Samenwerkingen Energiebedrijf Amsterdam, NL-1096 BA Amsterdam (NL)
(72) Inventor: Overbeek, Hans Hubertus, NL-1831 BN Koedijk (NL)
(74) Representative: Eveleens Maarse, Pieter

(57) **Abstract**

The invention relates to a substantially cylindrical transformer kiosk (1), the height of which is greater than the diameter and which is suitable for placing out in the open and provided with an entrance door (5), wherein the outer wall is fixed, and at least the outer wall is made of concrete. Arrangement of a fixed outer wall offers the possibility of entry to the ground level of the transformer kiosk (1), so that it is possible to fix the voltage-carrying equipment such that it is not accessible from outside.

According to a preferred embodiment the transformer kiosk (1) is provided with a floor (18) placed substantially at half the height of the cylindrical part (2,3). This floor (18) makes it possible to arrange the transformer (27) on top of this floor (18), whereby space is gained below.

## Description

The invention relates to a substantially cylindrical transformer kiosk, the height of which is greater than the diameter and which is suitable for placing out in the open and which is provided with an entrance door.

Such transformer kiosks have been used, particularly in Amsterdam, since the turn of the century. They fit well into the street environment and they create little aversion among the public. They moreover have a small base surface area, so that the space occupied is limited.

Such known transformer kiosks are however always made of steel. As a result, the construction is expensive and requires frequent maintenance. Particularly the bottom ring of such transformer kiosks with a height of about half a meter has to be replaced regularly because it is corroded by urine.

Another drawback of such known transformer kiosks is that they have been constructed over a good many years with traditional craft methods, which resulted structurally in small mutual differences in their embodiment. This makes it difficult to stock spare parts and makes maintenance more expensive.

Yet another drawback is that the side wall of such kiosks is provided with an entrance door and that the whole wall is rotatable around its axis. While access can hereby be obtained to the transformer and switching gear arranged at ground level in the transformer kiosk, the door remains open when work is being done thereon and there is a very real danger that live components could be touched directly by outsiders, for example children. It will be apparent that this is highly undesirable.

Another drawback of these prior art transformer kiosks is that the ground level in particular is full of equipment. This means that the access to the cable cellar located below ground level, in which work sometimes has to be carried out, can only be obtained through a very narrow manhole. Carrying out work operations in the cable cellar is therefore particularly unpleasant for personnel.

The object of the present invention is to provide such a transformer kiosk, the outward appearance of which does not differ very much from known transformer kiosks, and wherein the above stated drawbacks are avoided.

This object is achieved in that the outer wall is fixed and that at least the outer wall is made of concrete.

Arrangement of a fixed outer wall offers the possibility of entry to the ground level of the transformer kiosk, so that it is possible to fix the voltage-carrying equipment such that it is not accessible from outside. This further makes it possible to arrange a larger manhole for entry to the cable cellar. It will further be apparent that the use of concrete greatly simplifies maintenance and thus makes it cheaper. The use of concrete also enables the use of moulds, so that all the transformer kiosks made with these moulds are mutually similar.

According to a first preferred embodiment the transformer kiosk comprises concrete rings stacked one on top of another. This results in a simple method wherein the moulds required for manufacture can be kept as small as possible. According to a second preferred embodiment the transformer kiosk is provided with a floor placed substantially at half the height of the cylindrical part. This floor makes it possible to arrange the transformer on top of this floor, whereby space is gained below. Other attractive embodiments will be found in the description following hereinbelow.

The invention will now be elucidated with reference to the annexed drawings, in which:
figure 1 shows a perspective view of a transformer kiosk according to the invention;
figure 2 shows an exploded view of the transformer kiosk shown in figure 1; and
figure 3 shows a partly broken away perspective view of the transformer kiosk depicted in figure 1.

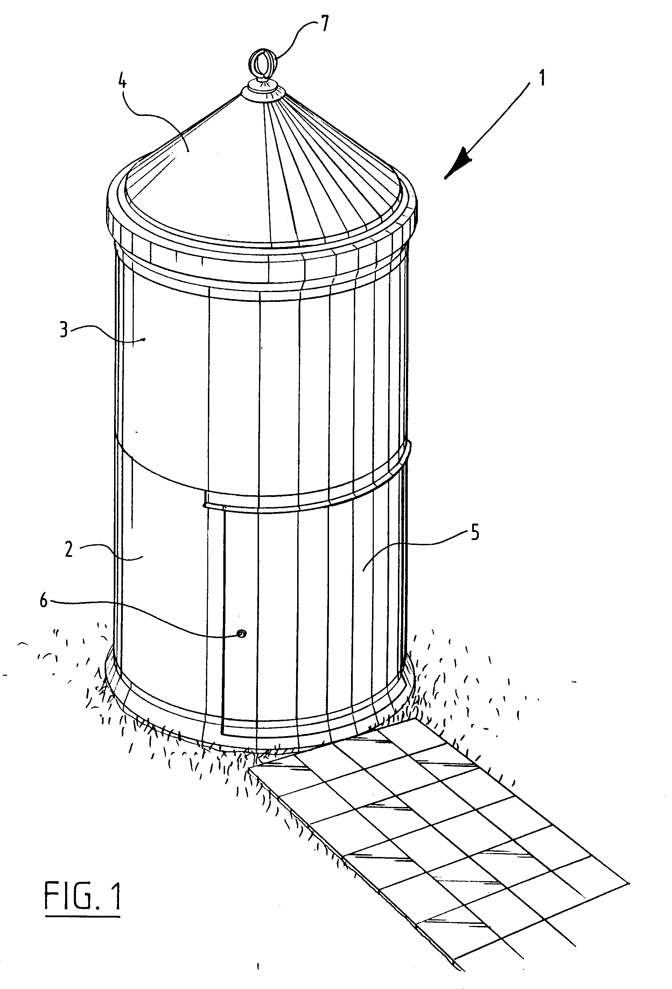

The transformer kiosk 1 shown in figure 1 is formed by a bottom cylindrical part 2 and a top cylindrical part 3, on which a conical part 4 is placed. Arranged in the bottom cylindrical part 2 is a door 5 with which access can be obtained to the interior of the transformer kiosk. A keyhole 6 is arranged in the door 5 for unlocking the door. The door 5 is preferably made of stainless steel. It is noted here that experience has shown that prior art transformer kiosks have posters pasted thereon; it is anticipated that this will likewise occur with the new transformer kiosks made of concrete.

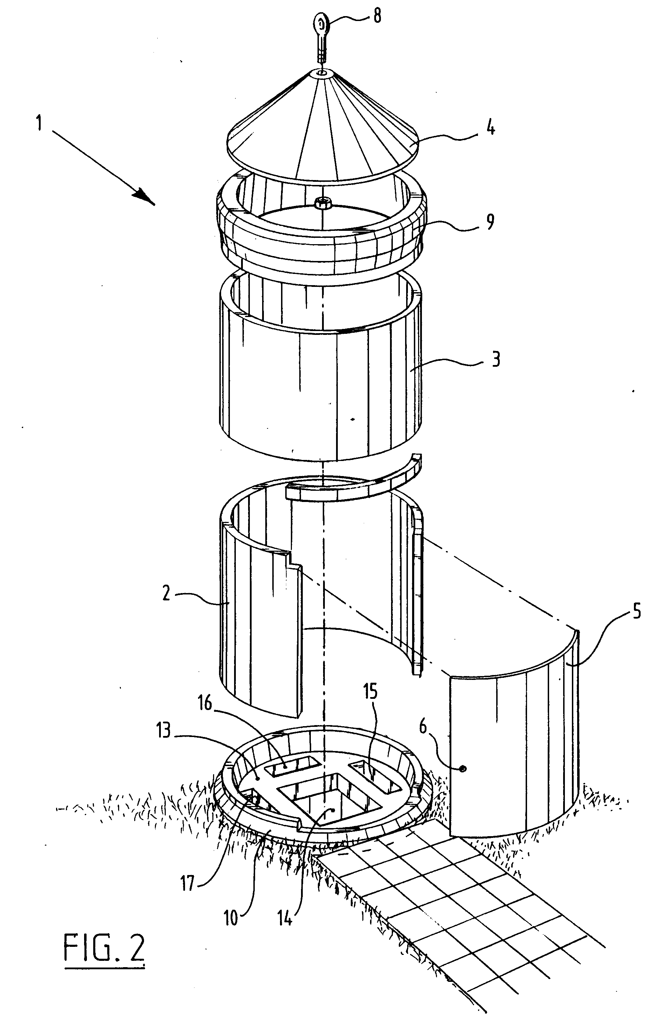

A crown 7, serving substantially as decoration, is arranged on the top of the conical part 4. The crown 7 is fixed by means of screw thread into a hole arranged centrally in the conical part 4. The crown 7 can be removed, whereafter the hole made available can be used for fixing a hoisting eye 8, as shown in figure 2.

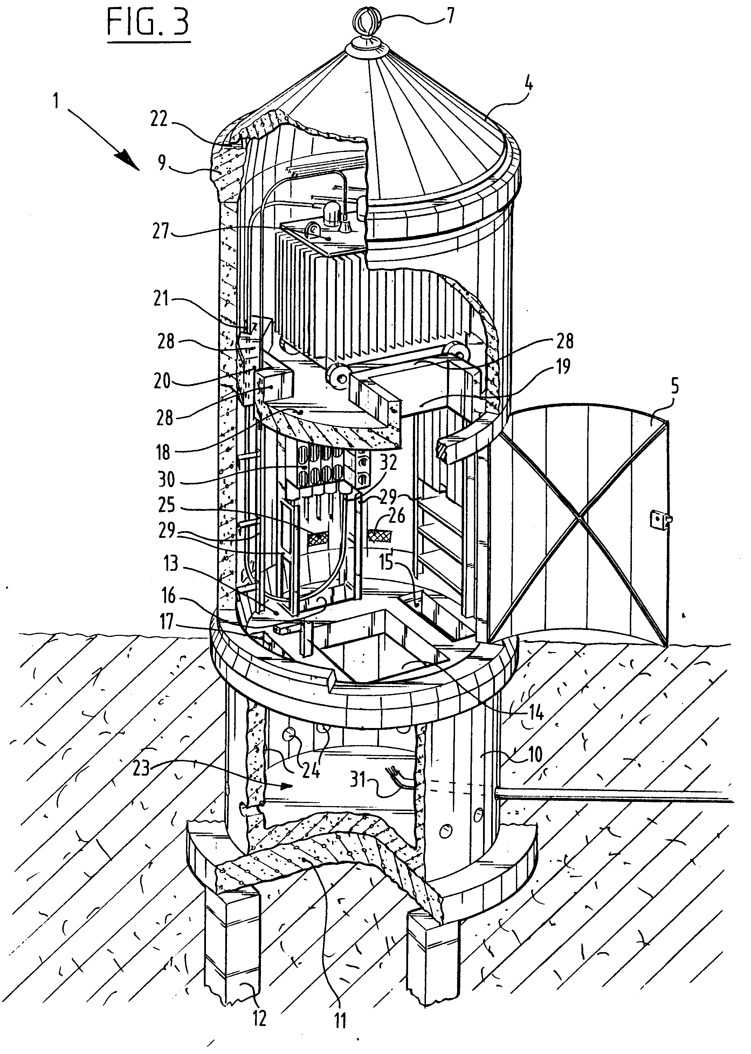

Figure 2 further shows that between the conical part 4 and the top cylindrical part 3 is placed a ring 9 in which a ventilation slot, not shown in the drawing, is arranged extending all the way round. The whole unit is placed on a foundation which is formed by a further annular part 10 which, as shown in figure 3, rests on a concrete plate 11 which rests on piles 12. Arranged in the ring 10 is a bottom plate 13, in which a manhole 14 is arranged, as are cable throughfeed holes 15,16,17. Further arranged, as shown in figure 3, at the level of the separation between the top ring 3 and the bottom ring 2 is a floor 18 in which a manhole 19 is likewise arranged, as are cable throughfeed holes 20 and 21.

It can also be seen in figure 3 that a ventilation slot 22 is present between the ring 9 and the conical part 4. Situated in the interior of the extra ring 10 is the so-called cable cellar 23 which is well accessible by means of the manhole 14. Cable bushings 24 are arranged in the cylindrical part. Further arranged just above ground level are a number of ventilation openings 25 which are closed off with gratings 26.

The most important electrical component, that is, the transformer 27, is situated on the floor 18. This placing provides on the one hand sufficient space in the area at ground level to accommodate the necessary switching gear, while placing is moreover facilitated by the removable conical part 4. In order to prevent oil flowing downward through the openings 19,20 and 21 in the case of a possible transformer leak, these openings are provided with raised edges 28.

In the part of the transformer kiosk 1 located above ground level are arranged racks 29 in which switching gear 30 is accommodated. Incoming ground cables 31 are guided through the openings 24 and connected to switching and safety equipment 30. Cables 32 lead from the switching and safety equipment 30 to the transformer 27. It is thus possible to obtain an easily accessible and safe arrangement of the transformer kiosk.

## Claims

1. Substantially cylindrical transformer kiosk, the height of which is greater than the diameter and which is suitable for placing out in the open and provided with an entrance door, **characterized in that** the outer wall is fixed, and that at least the outer wall is made of concrete.

2. Transformer kiosk as claimed in claim 1, **characterized in that** the kiosk comprises concrete rings stacked one on top of another.

3. Transformer kiosk as claimed in claim 2, **characterized by** a floor placed substantially at half the height of the cylindrical part.

4. Transformer kiosk as claimed in claim 1, 2 or 3, **characterized in that** a substantially conical part likewise manufactured from concrete is placed removably on a cylindrical part.

5. Transformer kiosk as claimed in claim 3, **characterized in that** the floor is adapted to support a transformer.

6. Transformer kiosk as claimed in claim 5, **characterized in that** a transformer is placed on the floor, and that switching gear is accommodated under the floor.

7. Transformer kiosk as claimed in claim 6, **characterized in that** the switching gear is arranged at least partially in racks placed against the walls.

8. Transformer kiosk as claimed in any of the foregoing claims, **characterized in that** the cylindrical part extends to below ground level, and that a second floor is arranged at the ground level position.

9. Transformer kiosk as claimed in any of the claims 3-8, **characterized in that** a manhole and a cable throughfeed opening are arranged in each of the floors.

10. Transformer kiosk as claimed in any of the claims 4-9, **characterized in that** between the cylindrical part and the conical part a ventilation slot is arranged extending substantially all the way round, and that ventilation openings are arranged above ground level in the cylindrical part.
